(19) Europäisches Patentamt
European Patent Office
Office européen des brevets

(11) EP 3 429 960 B1

(12) **FASCICULE DE BREVET EUROPEEN**

(45) Date de publication et mention de la délivrance du brevet:
**09.12.2020 Bulletin 2020/50**

(21) Numéro de dépôt: **17715231.1**

(22) Date de dépôt: **14.03.2017**

(51) Int Cl.:
***C01B 3/16*** (2006.01) ***C01B 3/48*** (2006.01)

(86) Numéro de dépôt international:
**PCT/FR2017/050575**

(87) Numéro de publication internationale:
**WO 2017/158277 (21.09.2017 Gazette 2017/38)**

(54) **PROCÉDÉ DE PRODUCTION DE GAZ DE SYNTHÈSE ENRICHI EN HYDROGÈNE**

VERFAHREN ZUR HERSTELLUNG VON WASSERSTOFFANGEREICHERTEM SYNTHESEGAS

METHOD FOR THE PRODUCTION OF HYDROGEN-ENRICHED SYNGAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2016 FR 1652291**

(43) Date de publication de la demande:
**23.01.2019 Bulletin 2019/04**

(73) Titulaire: **Arkema France**
**92700 Colombes (FR)**

(72) Inventeurs:
- **HUMBLOT, Francis**
  **64300 Lanneplaa (FR)**
- **SCHMITT, Paul Guillaume**
  **64230 Lescar (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**US-A- 4 243 554 US-A- 4 389 335**

- **LIAN Y ET AL: "Water gas shift activity of Co-Mo/MgO-Al2O3 catalysts presulfided with ammonium sulfide", JOURNAL OF NATURAL GAS CHEMISTRY, ELSEVIER, US, CN, vol. 19, no. 1, 1 janvier 2010 (2010-01-01), pages 61-66, XP026912303, ISSN: 1003-9953, DOI: 10.1016/S1003-9953(09)60037-2 [extrait le 2010-01-01]**
- **TEXIER S ET AL: "Activation of alumina-supported hydrotreating catalysts by organosulfides: comparison with H2S and effect of different solvents", JOURNAL OF CATALYSIS, ACADEMIC PRESS, DULUTH, MN, US, vol. 223, no. 2, 25 avril 2004 (2004-04-25), pages 404-418, XP004500283, ISSN: 0021-9517, DOI: 10.1016/J.JCAT.2004.02.011**
- **LANIECKI M ET AL: "Water-gas shift reaction over sulfided molybdenum catalysts supported on TiO2-ZrO2 mixed oxides", CATALYSIS TODAY, ELSEVIER, NL, vol. 116, no. 3, 15 août 2006 (2006-08-15) , pages 400-407, XP027975859, ISSN: 0920-5861 [extrait le 2006-08-15]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

La présente invention concerne un procédé de production de gaz de synthèse enrichi en hydrogène par une réaction de déplacement du gaz à l'eau catalytique conduite sur un gaz de synthèse brut.

### CONTEXTE DE L'INVENTION

Un gaz de synthèse, ou syngas en anglais, est un mélange de gaz combustible comprenant du monoxyde de carbone et de l'hydrogène, et facultativement d'autres gaz, tels que le dioxyde de carbone, l'azote et l'eau, des hydrocarbures (par exemple, le méthane), des gaz rares (par exemple, l'argon), des dérivés d'azote (par exemple, l'ammoniac, l'acide hydrocyanique), etc. Un gaz de synthèse peut être produit à partir de nombreuses sources, comprenant le gaz naturel, le charbon, une biomasse, ou pratiquement toute matière première hydrocarbure, par réaction avec de la vapeur d'eau ou de l'oxygène. Un gaz de synthèse est une ressource intermédiaire polyvalente pour la production d'hydrogène, d'ammoniac, de méthanol, et de combustibles hydrocarbures synthétiques.

Différents procédés sont couramment utilisés dans l'industrie pour la production de gaz de synthèse, principalement :

- le vaporeformage du méthane (SMR) ou le vaporeformage pour la conversion de méthane principalement. Le gaz de synthèse résultant ne contient pas de composés soufrés ;
- La gazéification ou oxydation partielle (POx) qui peut également être catalytique (CPOx) est principalement utilisée pour la conversion de matières premières lourdes telles que le naphte, le gaz de pétrole liquéfié, le mazout lourd, le coke, le charbon, une biomasse... Le gaz de synthèse résultant peut être particulièrement riche en composants contenant du soufre, principalement le sulfure d'hydrogène.

De la vapeur d'eau peut être ajoutée au gaz de synthèse afin de produire une quantité d'hydrogène plus élevée selon la réaction bien connue de déplacement du gaz à l'eau (« WGSR ») qui peut être conduite pour éliminer partiellement ou totalement le monoxyde de carbone par conversion de celui-ci en dioxyde de carbone :

$$H_2O_{(g)} + CO_{(g)} \leftrightarrows CO_{2(g)} + H_{2(g)}$$

où (g) indique une forme gazeuse.

La réaction de déplacement du gaz à l'eau est une réaction chimique exothermique, réversible couramment utilisée dans l'industrie.

Cette réaction peut être catalysée afin d'être conduite dans une plage de température raisonnable, typiquement moins de 500 °C. Le type de catalyseur généralement utilisé dépend de la teneur en soufre du gaz de synthèse à traiter. Par conséquent, les catalyseurs de déplacement du gaz à l'eau sont généralement classés dans deux catégories, comme décrit par David S. Newsome dans Catal. Rev.-Sci. Eng., 21(2), p. 275-318 (1980):

- les catalyseurs de déplacement à base de fer ou à base de cuivre, également appelés « catalyseurs de déplacement doux », sont utilisés avec un gaz de synthèse exempt de soufre (après une SMR, par exemple) en raison de leur désactivation par le soufre ;
- les catalyseurs de déplacement à base de cobalt et de molybdène, également appelés « catalyseurs de déplacement résistants au soufre » ou « catalyseurs de déplacement durs (sour) », qui sont utilisés avec un gaz de synthèse contenant du soufre (obtenu après une gazéification de charbon, par exemple). Ces catalyseurs sont fréquemment dopés avec un métal alcalin tel que le sodium, le potassium ou le césium.

La différence principale entre les catalyseurs de déplacement doux et les catalyseurs de déplacement résistants au soufre est que ces derniers sont actifs sous forme sulfurée et, par conséquent, doivent être pré-sulfurés avant utilisation, cf. Lian et al., Journal of Natural Gas Chemistry, Vol. 19, no. 1, 2010, pages 61-66. Les catalyseurs de déplacement résistants au soufre sont donc généralement totalement sulfurés sous leur forme la plus active. Par conséquent, ces catalyseurs ne sont pas seulement tolérants au soufre, mais leur activité peut en fait être augmentée par le soufre présent dans la matière première à traiter.

Les catalyseurs de déplacement résistants au soufre ont été largement développés ces dernières années. En effet, la quantité de combustibles fossiles, principalement le gaz naturel et le pétrole, est en constante diminution et de nombreux chercheurs ont consacré leurs études au développement de procédés utilisant des sources de carbone moins nobles, telles que le charbon ou une biomasse, qui sont généralement particulièrement riches en soufre. Le gaz de

synthèse obtenu à partir de ces sources de carbone contient généralement du sulfure d'hydrogène (H2S) et du sulfure de carbonyle (COS) qui peuvent activer et maintenir l'activité des catalyseurs de déplacement résistants au soufre pendant la réaction de déplacement du gaz à l'eau consécutivement conduite.

Cependant, certains gaz de synthèse ne contiennent pas une quantité suffisante de composés contenant du soufre en raison des faibles teneurs en soufre dans la matière première carbonée initiale. En effet, la teneur en soufre (endogène) des gaz de synthèse dépend principalement du type de charbon et de l'origine du charbon comme indiqué dans le tableau 1.

Tableau 1 : propriétés typiques pour des types de charbon caractéristiques

| **Type de charbon** | **Teneur en énergie, kJ/g (teneur en carbone, % en poids)** | **Soufre (% en poids)** |
|---|---|---|
| Bitumineux | 27 900 (moyenne consommée aux États-Unis) 67% | 2-4 |
| Sous-bitumineux (bassin de la Powder River) | 20 000 (moyenne consommée aux États-Unis) 49 % | 0,5-0,5 |
| Lignite | 15 000 (moyenne consommée aux États-Unis) 40% | 0,6-1,6 |
| Charbon chinois moyen | 19 000-25 000 48-61 % | 0,4-3,7 |
| Charbon indien moyen | 13 000-21 000 30-50 % | 0,2-0,7 |

Le sulfure d'hydrogène (H2S) est la principale source de soufre dans un gaz de synthèse obtenu après gazéification. Pour un gaz de synthèse contenant une teneur en soufre insuffisante, l'ajout de sulfure d'hydrogène supplémentaire (sulfure d'hydrogène exogène) est généralement effectué pour activer efficacement le catalyseur de déplacement résistant au soufre. En effet, l'ajout de $H_2S$ à un mélange de CO et $H_2O$ augmente considérablement la formation de $H_2$ et $CO_2$, comme décrit par Stenberg et al. dans Angew. Chem. Int. Ed. Engl., 21 (1982) n° 8, p. 619-620.

Cependant, le sulfure d'hydrogène présente l'inconvénient d'être un composé gazeux hautement toxique et inflammable que les fabricants s'efforcent d'éviter.

Par conséquent, il serait souhaitable d'utiliser un autre agent d'activation qui est plus facile à manipuler et plus sûr à utiliser que le sulfure d'hydrogène, tout en étant aussi efficace que le sulfure d'hydrogène pour activer les catalyseurs de déplacement résistants au soufre et maintenir leur activité.

Il est un objectif de la présente invention de développer un procédé plus sûr pour la réaction de déplacement du gaz à l'eau à partir d'un gaz de synthèse contenant du soufre.

Un autre objectif de la présente invention est la mise en œuvre d'un procédé à l'échelle industrielle pour la réaction de déplacement du gaz à l'eau à partir d'un gaz de synthèse contenant du soufre.

## RÉSUMÉ DE L'INVENTION

Un premier objet de l'invention est un procédé de production de gaz de synthèse enrichi en hydrogène par une réaction de déplacement du gaz à l'eau catalytique conduite sur un gaz de synthèse brut dans un réacteur, ladite réaction étant conduite en présence d'au moins un composé de formule (I) :

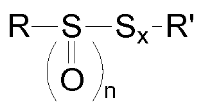

(I)

dans laquelle :

- R est choisi parmi un radical alkyle linéaire ou ramifié contenant de 1 à 4 atomes de carbone, et un radical alcényle linéaire ou ramifié contenant de 2 à 4 atomes de carbone,
- n est égal à 0, 1 ou 2,
- x est un entier choisi parmi 0, 1, 2, 3 ou 4,

- R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène dans lequel le composé de formule (I) est ajouté au gaz de synthèse brut en amont du réacteur et le mélange résultant est injecté en continu dans le réacteur.

Selon un mode de réalisation préféré, le composé de formule (I) est choisi parmi le disulfure de diméthyle et le diméthylsulfoxyde, de préférence le disulfure de diméthyle.
Selon un mode de réalisation, la réaction de déplacement du gaz à l'eau catalytique est conduite dans un réacteur avec une température de gaz d'entrée d'au moins 260 °C, de préférence dans la plage de 280 °C à 330 °C.
Selon un mode de réalisation, le composé de formule (I) est injecté en continu à un débit de 0,1 Nl/h à 10 $Nm^3/h$.
Selon un mode de réalisation, la réaction de déplacement du gaz à l'eau catalytique est conduite en présence d'un catalyseur de déplacement résistant au soufre, de préférence un catalyseur à base de cobalt et de molybdène.
De préférence, le catalyseur de déplacement résistant au soufre comprend un métal alcalin, de préférence choisi parmi le sodium, le potassium ou le césium.
Selon un mode de réalisation, la réaction de déplacement du gaz à l'eau catalytique est conduite à une pression d'au moins 10 bar, de préférence dans la plage de 10 à 30 bar.
Selon un mode de réalisation, le gaz de synthèse brut comprend de l'eau et du monoxyde de carbone dans un rapport molaire de l'eau au monoxyde de carbone d'au moins 1, de préférence au moins 1,2, plus préférablement au moins 1,4.
De préférence, le temps de séjour dans le réacteur est dans la plage de 20 à 60 secondes.
Un autre objet de l'invention est l'utilisation d'au moins un composé de formule (I) :

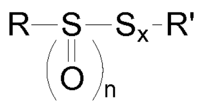
(I)

dans laquelle :

- R est choisi parmi un radical alkyle linéaire ou ramifié contenant de 1 à 4 atomes de carbone, et un radical alcényle linéaire ou ramifié contenant de 2 à 4 atomes de carbone,
- n est égal à 0, 1 ou 2,
- x est un entier choisi parmi 0, 1, 2, 3 ou 4,
- R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène,

dans une réaction de déplacement du gaz à l'eau catalytique conduite dans réacteur pour activer un catalyseur de déplacement résistant au soufre, dans laquelle le composé de formule (I) est ajouté à un gaz de synthèse brut en amont du réacteur et le mélange résultant est injecté en continu dans le réacteur.
Selon un mode de réalisation préféré, le disulfure de diméthyle et le diméthylsulfoxyde, de préférence le disulfure de diméthyle, sont utilisés pour activer un catalyseur de déplacement résistant au soufre dans une réaction de déplacement du gaz à l'eau catalytique.
Il a été désormais découvert de manière inattendue que l'utilisation de composé(s) de formule (I) est particulièrement efficace en tant qu'agent d'activation de catalyseurs de déplacement résistants au soufre à la place du sulfure d'hydrogène.
De plus, les composés de formule (I) sont généralement présentés sous forme liquide, ce qui facilite grandement leur manipulation et les mesures devant être prises pour la sécurité des opérateurs.
Un autre avantage est que le procédé de l'invention permet la conversion de CO en $CO_2$.
De plus, le procédé de l'invention est adapté en ce qui concerne les exigences relatives à la sécurité l'environnement.

DESCRIPTION DÉTAILLÉE DE L'INVENTION

L'invention concerne un procédé de production de gaz de synthèse enrichi en hydrogène par une réaction de déplacement du gaz à l'eau catalytique conduite sur un gaz de synthèse brut dans un réacteur, ladite réaction étant conduite en présence d'au moins un composé de formule (I) :

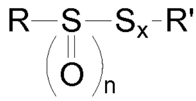

(I)

dans laquelle :

- R est choisi parmi un radical alkyle linéaire ou ramifié contenant de 1 à 4 atomes de carbone, et un radical alcényle linéaire ou ramifié contenant de 2 à 4 atomes de carbone,
- n est égal à 0, 1 ou 2,
- x est un entier choisi parmi 0, 1, 2, 3 ou 4,
- R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène dans lequel le composé de formule (I) est ajouté au gaz de synthèse brut en amont du réacteur et le mélange résultant est injecté en continu dans le réacteur.

Le gaz de synthèse brut est typiquement obtenu après une étape de gazéification d'une matière première telle que le coke, le charbon, une biomasse, le naphte, le gaz de pétrole liquéfié, le mazout lourd. La production de gaz de synthèse est connue dans l'état de l'art. Le gaz de synthèse brut peut également être obtenu à partir d'un vaporeformeur de méthane.

Selon la présente invention, le gaz de synthèse brut comprend du monoxyde de carbone, et facultativement d'autres gaz, tels que l'hydrogène, le dioxyde de carbone, l'azote et l'eau, des hydrocarbures (par exemple, le méthane), des gaz rares (par exemple, l'argon), des dérivés d'azote (par exemple, l'ammoniac, l'acide hydrocyanique), etc.

Selon un mode de réalisation de l'invention, le gaz de synthèse brut comprend du monoxyde de carbone et de l'hydrogène, et facultativement d'autres gaz, tels que le dioxyde de carbone, l'azote et l'eau, des hydrocarbures (par exemple, le méthane), des gaz rares (par exemple, l'argon), des dérivés d'azote (par exemple, l'ammoniac, l'acide hydrocyanique), etc.

Selon un autre mode de réalisation de l'invention, le gaz de synthèse brut comprend du monoxyde de carbone, du dioxyde de carbone, de l'hydrogène, de l'azote et de l'eau.

Le gaz de synthèse brut peut comprendre en outre des composants contenant du soufre. Dans ce cas, le gaz de synthèse brut peut comprendre du monoxyde de carbone, du dioxyde de carbone, de l'hydrogène, de l'azote et de l'eau en tant que composants principaux et des composants contenant du soufre à des concentrations plus faibles. Les composants contenant du soufre peuvent être le sulfure d'hydrogène, le sulfure de carbonyle. La teneur en soufre (endogène) typique dans le gaz de synthèse brut est dans la plage d'environ 20 à environ 50 000 ppmv. La teneur en soufre (endogène) typique dans le gaz de synthèse brut peut dépendre de la matière première initialement utilisée pour la production du gaz de synthèse brut.

La réaction de déplacement du gaz à l'eau est conduite de préférence dans un réacteur catalytique à lit fixe.

La réaction de déplacement du gaz à l'eau consiste en la conversion de monoxyde de carbone et d'eau contenus dans le gaz de synthèse brut en dioxyde de carbone et en hydrogène selon l'équation (1) :

$$H_2O_{(g)} + CO_{(g)} \leftrightarrows CO_{2(g)} + H_{2(g)} \qquad (1)$$

où (g) indique une forme gazeuse.

Cette réaction de déplacement du gaz à l'eau permet d'obtenir un gaz de synthèse enrichi en hydrogène.

Un « gaz de synthèse enrichi en hydrogène » selon la présente invention signifie que le gaz de synthèse à la sortie du procédé de l'invention comprend plus d'hydrogène que le gaz de synthèse à l'entrée du procédé de l'invention. En d'autres termes, la proportion d'hydrogène dans le gaz à la sortie du procédé est supérieure à la proportion d'hydrogène dans le gaz à la sortie du procédé.

Selon un mode de réalisation de l'invention, de l'eau peut être ajoutée au gaz de synthèse brut. L'introduction d'eau (exogène) additionnelle permet de déplacer l'équilibre vers la formation de dioxyde de carbone et d'hydrogène. De l'eau (exogène) additionnelle peut être introduite directement dans le réacteur ou dans un mélange avec le gaz de synthèse brut.

L'efficacité de la réaction de déplacement du gaz à l'eau et donc, de l'enrichissement en hydrogène du gaz de synthèse peut être mesurée directement par analyse de pureté d'hydrogène, par exemple avec un système de chromatographie gazeuse. Elle peut également être mesurée indirectement par détermination de la conversion de CO en $CO_2$, qui indique que la réaction de déplacement du gaz à l'eau s'est produite. La conversion de CO en $CO_2$ est connue par mesure de la conversion de CO et du rendement en $CO_2$.

Dans un mode de réalisation de l'invention, le rapport molaire de l'eau au monoxyde de carbone dans le gaz

entrant dans la réaction de déplacement du gaz à l'eau est d'au moins 1, de préférence au moins 1,2, plus préférablement au moins 1,4, avantageusement au moins 1,5. Le rapport molaire de l'eau au monoxyde de carbone peut être dans la plage de 1 à 3, de préférence de 1,2 à 2,5, plus préférablement de 1,5 à 2.

Dans un mode de réalisation de l'invention, des catalyseurs adaptés pour utilisation dans la réaction de déplacement du gaz à l'eau sont des catalyseurs de déplacement résistants au soufre. Un « catalyseur de déplacement résistant au soufre » désigne un composé capable de catalyser la réaction de déplacement du gaz à l'eau en présence de composants contenant du soufre.

Des catalyseurs adaptés pour utilisation dans la réaction de déplacement du gaz à l'eau peut comprendre au moins un métal de transition autre que le fer et le cuivre, de préférence choisi dans le groupe constitué du molybdène, du cobalt et du nickel. Une combinaison d'au moins deux de ces métaux de transition est de préférence utilisée, telle que cobalt et molybdène, ou nickel et molybdène, plus préférablement cobalt et molybdène.

Les catalyseurs selon l'invention peuvent être immobilisés ou non sur un support, de préférence immobilisés sur un support. Des supports de catalyseur adaptés peuvent être l'alumine.

Dans un mode de réalisation préféré, le catalyseur comprend en outre un métal alcalin choisi dans le groupe constitué du sodium, du potassium et du césium, de préférence le potassium et le césium, ou des sels de ceux-ci. Un exemple d'un catalyseur particulièrement actif est la combinaison de carbonate de césium, d'acétate de césium, de carbonate de potassium ou d'acétate de potassium, conjointement avec du cobalt et du molybdène.

À titre d'exemple de catalyseurs selon l'invention adaptés, il peut être mentionné des catalyseurs de déplacement résistants au soufre tels que ceux décrits par Park et al. dans « A Study on the Sulfur-Resistant Catalysts for Water Gas Shift Reaction - IV. Modification of CoMo/γ-Al2O3 Catalyst with Iron Group Metals », Bull. Korean Chem. Soc. (2000), vol. 21, n° 12, 1239-1244.

Le procédé selon l'invention utilise au moins un composé de formule (I) en tant qu'agent d'activation :

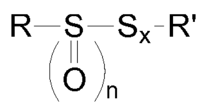

(I)

dans laquelle :

- R est choisi parmi un radical alkyle linéaire ou ramifié contenant de 1 à 4 atomes de carbone, et un radical alcényle linéaire ou ramifié contenant de 2 à 4 atomes de carbone,
- n est égal à 0, 1 ou 2,
- x est un entier choisi parmi 0, 1, 2, 3 ou 4,
- R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène.

Selon un mode de réalisation, le composé de formule (I) qui peut être utilisé dans le procédé de la présente invention est un sulfure organique, facultativement sous sa forme d'oxyde (lorsque n est différent de zéro), obtenu selon un procédé quelconque connu en tant que tel, ou sinon, disponible dans le commerce, contenant facultativement une quantité réduite ou nulle d'impuretés qui peuvent être responsables d'odeurs indésirables, ou contenant facultativement un ou plusieurs agents de masquage d'odeur (voir, par exemple, WO2011012815A1).

Parmi les radicaux R et R' préférés, il peut être mentionné les radicaux méthyle, propyle, allyle et 1-propényle.

Selon un mode de réalisation de l'invention, dans la formule (I) ci-dessus, x représente 1, 2, 3 ou 4, de préférence x représente 1 ou 2, plus préférablement x représente 1.

Selon un mode de réalisation préféré, le composé de formule (I) pour utilisation dans le procédé de la présente invention est un composé de formule (Ia) :

R-S-Sx-R' (Ia)

qui correspond à la formule (I) dans laquelle n est égal à 0, et R, R' et x sont tels que définis ci-dessus.

De préférence, le composé de formule (Ia) est le disulfure de diméthyle (« DMDS »).

Selon un mode de réalisation préféré de l'invention, le composé de formule (I) utile dans la présente invention est un composé de formule (Ib) :

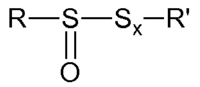

(Ib)

qui correspond à la formule (I) dans laquelle n est égal à 1, et R, R' et x sont tels que définis ci-dessus.

De préférence, le composé de formule (Ib) est le diméthylsulfoxyde (« DMSO »).

Il doit être entendu que des mélanges de deux composés de formule (I) ou plus peuvent être utilisés dans le procédé de la présente invention. En particulier, des mélanges de di- et/ou polysulfures peuvent être utilisés, par exemple des mélanges de disulfures, tels que des huiles de disulfure (« DSO »).

Le(s) composé(s) de formule (I) est (sont) ajoutés en amont du réacteur au flux de gaz de synthèse brut et le mélange résultant est injecté en continu dans le réacteur. La concentration de composé(s) de formule (I) dans le gaz de synthèse brut flux peut être dans la plage de 100 à 500 000 ppmv, de préférence de 100 à 200 000 ppmv, plus préférablement de 100 à 100 000 ppmv. Le débit de composé(s) de formule (I), de préférence le disulfure de diméthyle, peut être dans la plage de 1 Nl/h à 10 $Nm^3$/h.

Dans un mode de réalisation de l'invention, le gaz entrant dans la réaction de déplacement du gaz à l'eau est préchauffé à une température d'au moins 260 °C. Dans un mode de réalisation préféré, cette température est dans la plage de 280 à 330 °C, de préférence de 290 à 330 °C, plus préférablement de 310 °C.

L'étape de réaction de déplacement du gaz à l'eau peut être conduite avec une température de gaz d'entrée minimale de 260 °C. Une température de gaz d'entrée d'au moins 260 °C permet d'améliorer la conversion de monoxyde de carbone en dioxyde de carbone.

Dans un mode de réalisation de l'invention, la pression pour l'étape de réaction de déplacement du gaz à l'eau est d'au moins 10 bar (1 MPa), de préférence dans la plage de 10 à 30 bar (1 MPa à 3 MPa), plus préférablement de 15 à 25 bar (1,5 MPa à 2,5 MPa).

Dans un mode de réalisation de l'invention, le temps de séjour dans le réacteur est dans la plage de 20 à 60 secondes, de préférence de 30 à 50 secondes, de manière à permettre la détermination de la quantité de catalyseur dans le réacteur. Le temps de séjour est défini par la formule suivante :

$$residence\ time = \frac{V_{cat}}{D_{gas}} \times \frac{P_{reac}}{P_{atm}}$$

dans laquelle $V_{cat}$ représente le volume de catalyseur dans le réacteur exprimé en $m^3$, $D_{gaz}$ représente le débit de gaz d'entrée exprimé en $Nm^3/s$, $P_{réac}$ et $P_{atm}$ représentent respectivement la pression dans le réacteur et la pression atmosphérique exprimées en Pa.

Dans un mode de réalisation de l'invention, le taux de conversion de CO de la réaction de déplacement du gaz à l'eau est d'au moins 50 %, de préférence au moins 60 %, plus préférablement au moins 65 %. Le taux de conversion de CO est calculé comme suit :

$$CO\ Conversion\ (\%) = \frac{(Q.CO_{entry} - Q.CO_{exit})}{Q.CO_{entry}} \times 100$$

où $Q.CO_{entrée}$ représente le débit molaire de CO à l'entrée du réacteur exprimé en mol/h et $Q.CO_{sortie}$ représente le débit molaire de CO à la sortie du réacteur exprimé en mol/h.

Dans un mode de réalisation de l'invention, le rendement en $CO_2$ de la réaction de déplacement du gaz à l'eau est d'au moins 50 %, de préférence au moins 60 %, plus préférablement au moins 65 %.

Le rendement en $CO_2$ est calculé comme suit :

$$CO_2\ yield\ (\%) = \frac{(Q.CO_{2,exit})}{(Q.CO_{entry})} \times 100$$

où $Q.CO_{entrée}$ représente le débit molaire de CO à l'entrée du réacteur exprimé en mol/h et $Q.CO_{2,\ sortie}$ représente le débit molaire de $CO_2$ à la sortie du réacteur exprimé en mol/h.

Dans un mode de réalisation préféré de l'invention, le réacteur comprenant le catalyseur peut être rempli avec un matériau inerte pour permettre une distribution efficace du gaz dans le réacteur avant le démarrage du réacteur pour

l'étape de réaction de déplacement du gaz à l'eau. Des matériaux inertes adaptés peuvent être le carbure de silicium ou l'alumine. Avantageusement, le catalyseur et le matériau inerte sont placés dans des couches successives dans le réacteur.

Dans un mode de réalisation préféré de l'invention, une étape de préparation du catalyseur est conduite avant l'étape de réaction de déplacement du gaz à l'eau. L'étape de préparation du catalyseur peut comprendre une étape de séchage et/ou une étape de pré-activation, de préférence une étape de séchage et une étape de pré-activation.

Pendant l'étape de séchage, le catalyseur peut être séché sous un flux de gaz inerte, de préférence un flux de gaz d'azote. Le débit de gaz inerte peut être dans la plage de 0,1 à 10 000 $Nm^3/h$. Pendant l'étape de séchage, la température peut augmenter de 20 °C à 200 °C. Le temps de séchage peut être dans la plage de 1 à 10 heures, de préférence 6 heures. L'étape de séchage est de préférence conduite de la pression ambiante à la pression opératoire préférée entre 15 à 25 bar.

Pendant l'étape de pré-activation, le catalyseur peut être sulfuré. Le réacteur peut être traité sous un courant d'hydrogène à un débit de 0,1 à 10 000 $Nm^3/h$ et à une pression de, au moins, la pression opératoire préférée entre 15 et 25 bar (1,5 MPa à 2,5 MPa). Ensuite, du sulfure d'hydrogène et/ou le(s) composé(s) de formule (I), typiquement le disulfure de diméthyle, peuvent être injectés en flux ascendant à un débit de 1 Nl/h à 10 $Nm^3/h$ dans le courant d'hydrogène. La température peut ensuite être augmentée de 150 °C à 350 °C par des moyens quelconques connus de l'homme du métier. La durée de l'étape de pré-activation peut être dans la plage d'une à plusieurs heures, généralement de 1 à 64 heures. Le courant d'hydrogène est de préférence maintenu pendant toute la durée de l'étape de pré-activation.

Un autre objet de l'invention concerne l'utilisation d'au moins un composé de formule (I) dans une réaction de déplacement du gaz à l'eau catalytique pour activer un catalyseur de déplacement résistant au soufre dans un réacteur, ans laquelle le composé de formule (I) est ajouté à un gaz de synthèse brut en amont du réacteur et le mélange résultant est injecté en continu dans le réacteur.

Dans un mode de réalisation de l'invention, la réaction de déplacement du gaz à l'eau catalytique utilisant au moins un composé de formule (I) pour activer un catalyseur de déplacement résistant au soufre est conduite dans un réacteur. Le gaz entrant dans ledit réacteur est avantageusement chauffé à une température d'au moins 260 °C.

## EXEMPLES

Une réaction de déplacement du gaz à l'eau est conduite dans un réacteur catalytique A d'une installation pilote selon la procédure suivante.

*1) Préparation du réacteur catalytique A*

Un réacteur catalytique A de 150 $cm^3$ est rempli à pression ambiante et à température ambiante avec trois couches de matières solides séparées par des grilles métalliques, comme suit :

- une première couche de 60 $cm^3$ de carbure de silicium de type Carborundum ayant une taille de particule de 1,680 mm : ce matériau inerte permet une distribution de gaz satisfaisante,
- une deuxième couche de 40 $cm^3$ d'un catalyseur de déplacement résistant au soufre à base de CoMo,
- une troisième couche de 50 $cm^3$ de carbure de silicium de type Carborundum ayant une taille de particule de 1,680 mm.

Le réacteur catalytique A est ensuite placé dans un four qui peut supporter une large plage de température de 100 à 350 °C. Le réacteur catalytique A est raccordé à la tubulure d'entrée à une alimentation de gaz et à la tubulure de sortie à un analyseur.

Pour l'exemple, le catalyseur de déplacement résistant au soufre à base de CoMo est dans un premier temps séché par un débit d'azote de 20 Nl/h à la pression ambiante. La température de séchage est définie à 150 °C avec une montée de température de +25 °C/h. Le temps de séchage est défini à 1 heure.

Une deuxième étape consiste à sulfurer le catalyseur de déplacement résistant au soufre à base de CoMo pour le pré-activer. Pendant cette étape, le réacteur est traité sous un débit d'hydrogène de 20 Nl/h à une pression de 35 bar (3,5 MPa). Ensuite, du sulfure d'hydrogène est injecté en flux ascendant à un débit de 0,5 Nl/h dans l'alimentation d'hydrogène. Le catalyseur est ensuite soumis à une montée de température de 20 °C/h. Le premier plateau est défini à 150 °C pendant 2 heures, puis la température est augmentée jusqu'à 230 °C avec une montée de température de +25 °C/h. Un deuxième plateau de 4 heures est maintenu à 230 °C et ensuite, la température est à nouveau augmentée à 350 °C avec une montée de température de +25 °C/h. Un plateau final de 16 heures est effectué à 350 °C. La température est ensuite réduite à 230 °C toujours sous un courant d'hydrogène avec un débit de 20 Nl/h : le catalyseur est ainsi pré-activé.

*2) Étape de réaction de déplacement du gaz à l'eau*

L'étude de la conversion de monoxyde de carbone en dioxyde de carbone dans le catalyseur de déplacement résistant au soufre à base de CoMo pré-activé est ensuite conduite. Le réacteur catalytique A est traité en flux ascendant avec un mélange de gaz comprenant de l'hydrogène à un débit de 8,5 Nl/h, du monoxyde de carbone à 17 Nl/h, de l'eau à 0,33 $cm^3$/min et de l'azote à 26 Nl/h à une pression de 20 bar (2 MPa). Le rapport molaire $H_2O$/CO est de 1,44 et le temps de séjour est de 38 secondes. Un agent d'activation est ensuite injecté en flux ascendant dans le mélange de gaz. L'agent d'activation est le sulfure d'hydrogène (H2S) ou le disulfure de diméthyle (DMDS). Dans le cas où l'agent d'activation est DMDS, le débit de DMDS est défini à 1 $cm^3$/h. Dans le cas où l'agent d'activation est $H_2S$, le débit de $H_2S$ est défini à 0,5 Nl/h. La température du gaz entrant dans le réacteur catalytique A est maintenue à 310 °C.

Les concentrations de CO et $CO_2$ du flux gazeux sont mesurées avec un analyseur de spectrométrie infrarouge raccordé à la sortie du réacteur catalytique A afin de déterminer la conversion de CO et le rendement en $CO_2$.

Dans le cas où l'agent d'activation est $H_2S$, un taux de conversion de CO de 92 % et un rendement en $CO_2$ de 95 % sont obtenus, un tel taux reflétant les bonnes performances de la réaction de déplacement du gaz à l'eau.

Le même taux de conversion est obtenu lorsque DMDS est utilisé en tant qu'agent d'activation. Par conséquent, DMDS est aussi efficace que $H_2S$ pour activer le catalyseur de déplacement résistant au soufre pour la réaction de déplacement du gaz à l'eau.

Le procédé utilisant au moins un composé selon la formule (I) tel que défini dans la présente invention à la place du sulfure d'hydrogène gazeux est, par conséquent, aussi efficace, plus sûr et plus facile à mettre en œuvre.

**Revendications**

1. Procédé de production de gaz de synthèse enrichi en hydrogène par une réaction de déplacement du gaz à l'eau catalytique conduite sur un gaz de synthèse brut dans un réacteur, ladite réaction étant conduite en présence d'au moins un composé de formule (I) :

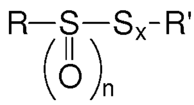

(I)

dans laquelle :

- R est choisi parmi un radical alkyle linéaire ou ramifié contenant de 1 à 4 atomes de carbone, et un radical alcényle linéaire ou ramifié contenant de 2 à 4 atomes de carbone,
- n est égal à 0, 1 ou 2,
- x est un entier choisi parmi 0, 1, 2, 3 ou 4,
- R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène dans lequel le composé de formule (I) est ajouté au gaz de synthèse brut en amont du réacteur et le mélange résultant est injecté en continu dans le réacteur.

2. Procédé selon la revendication 1, dans lequel le composé de formule (I) est choisi parmi le disulfure de diméthyle et le diméthylsulfoxyde, de préférence le disulfure de diméthyle.

3. Procédé selon la revendication 1 ou 2, dans lequel la réaction de déplacement du gaz à l'eau catalytique est conduite dans le réacteur avec une température de gaz d'entrée d'au moins 260 °C, de préférence dans la plage de 280 °C à 330 °C.

4. Procédé selon l'une quelconque des revendications 1 à 3, dans lequel le composé de formule (I) est injecté en continu à un débit de 0,1 Nl/h à 10 $Nm^3$/h.

5. Procédé selon l'une quelconque des revendications 1 à 4, dans lequel la réaction de déplacement du gaz à l'eau catalytique est conduite en présence d'un catalyseur de déplacement résistant au soufre, de préférence un catalyseur à base de cobalt et de molybdène.

6. Procédé selon la revendication 5, dans lequel le catalyseur de déplacement résistant au soufre comprend un métal

alcalin, de préférence choisi parmi le sodium, le potassium ou le césium.

**7.** Procédé selon l'une quelconque des revendications 1 à 6, dans lequel la réaction de déplacement du gaz à l'eau catalytique est conduite à une pression d'au moins 10 bar, de préférence dans la plage de 10 à 30 bar.

**8.** Procédé selon l'une quelconque des revendications 1 à 7, dans lequel le gaz de synthèse brut comprend de l'eau et du monoxyde de carbone dans un rapport molaire de l'eau au monoxyde de carbone d'au moins 1, de préférence au moins 1,2, plus préférablement au moins 1,4.

**9.** Procédé selon l'une quelconque des revendications 1 à 8, dans lequel le temps de séjour dans le réacteur est dans la plage de 20 à 60 secondes.

**10.** Utilisation d'au moins un composé de formule (I) :

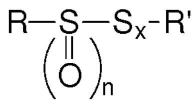

(I)

dans laquelle :

- R est choisi parmi un radical alkyle linéaire ou ramifié contenant de 1 à 4 atomes de carbone, et un radical alcényle linéaire ou ramifié contenant de 2 à 4 atomes de carbone,
- n est égal à 0, 1 ou 2,
- x est un entier choisi parmi 0, 1, 2, 3 ou 4,
- R' est choisi parmi un radical alkyle linéaire ou ramifié contenant de 1 à 4 atomes de carbone, un radical alcényle linéaire ou ramifié contenant de 2 à 4 atomes de carbone et, uniquement lorsque n=x=0, un atome d'hydrogène,

dans une réaction de déplacement du gaz à l'eau catalytique conduite dans un réacteur pour activer un catalyseur de déplacement résistant au soufre,
dans laquelle le composé de formule (I) est ajouté à un gaz de synthèse brut en amont du réacteur et le mélange résultant est injecté en continu dans le réacteur.

**11.** Utilisation selon la revendication 10, dans laquelle le composé de formule (I) est choisi parmi le disulfure de diméthyle et le diméthylsulfoxyde, de préférence le disulfure de diméthyle.

**Patentansprüche**

**1.** Verfahren zur Herstellung von wasserstoffangereichertem Synthesegas durch eine an einem rohen Synthesegas durchgeführte katalytische Wassergas-Shift-Reaktion, wobei die Reaktion in Gegenwart mindestens einer Verbindung der Formel (I) durchgeführt wird:

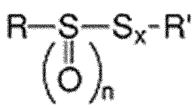

(I),

in welcher:

- R aus einem linearen oder verzweigten Alkylrest mit 1 bis 4 Kohlenstoffatomen und einem linearen oder verzweigten Alkenylrest mit 2 bis 4 Kohlenstoffatomen ausgewählt ist,
- n gleich 0, 1 oder 2 ist,
- x für eine ganze Zahl steht, die aus 0, 1, 2, 3 oder 4 ausgewählt ist,
- R' aus einem linearen oder verzweigten Alkylrest mit 1 bis 4 Kohlenstoffatomen, einem linearen oder verzweigten Alkenylrest mit 2 bis 4 Kohlenstoffatomen ausgewählt ist und nur im Fall von n = x = 0 einem Wasserstoffatom ausgewählt ist,

wobei die Verbindung der Formel (I) dem rohen Synthesegas stromaufwärts des Reaktors zugesetzt wird und die resultierende Mischung kontinuierlich in den Reaktor eingeleitet wird.

**2.** Verfahren nach Anspruch 1, wobei die Verbindung der Formel (I) aus Dimethyldisulfid und Dimethylsulfoxid, vorzugsweise Dimethyldisulfid, ausgewählt wird.

**3.** Verfahren nach Anspruch 1 oder 2, wobei die katalytische Wassergas-Shift-Reaktion in einem Reaktor mit einer Einlassgastemperatur von mindestens 260 °C, vorzugsweise im Bereich von 280 °C bis 330 °C, durchgeführt wird.

**4.** Verfahren nach einem der Ansprüche 1 bis 3, wobei die Verbindung der Formel (I) mit einer Durchflussrate von 0,1 Nl/h bis 10 $Nm^3/h$ kontinuierlich eingeleitet wird.

**5.** Verfahren nach einem der Ansprüche 1 bis 4, wobei die katalytische Wassergas-Shift-Reaktion in Gegenwart eines schwefelbeständigen Shift-Katalysators, vorzugsweise eines Katalysators auf Basis von Cobalt und Molybdän, durchgeführt wird.

**6.** Verfahren nach Anspruch 5, wobei der schwefelbeständige Shift-Katalysator ein Alkalimetall umfasst, das vorzugsweise aus Natrium, Kalium oder Caesium ausgewählt ist.

**7.** Verfahren nach einem der Ansprüche 1 bis 6, wobei die katalytische Wassergas-Shift-Reaktion bei einem Druck von mindestens 10 bar, vorzugsweise im Bereich von 10 bis 30 bar, durchgeführt wird.

**8.** Verfahren nach einem der Ansprüche 1 bis 7, wobei das rohe Synthesegas Wasser und Kohlenmonoxid in einem Molverhältnis von Wasser zu Kohlenmonoxid von mindestens 1, vorzugsweise mindestens 1,2, weiter bevorzugt 1,4, umfasst.

**9.** Verfahren nach einem der Ansprüche 1 bis 8, wobei die Verweilzeit im Reaktor im Bereich von 20 bis 60 Sekunden liegt.

**10.** Verwendung mindestens einer Verbindung der Formel (I) :

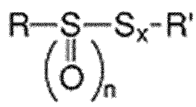

(I),

in welcher:

- R aus einem linearen oder verzweigten Alkylrest mit 1 bis 4 Kohlenstoffatomen und einem linearen oder verzweigten Alkenylrest mit 2 bis 4 Kohlenstoffatomen ausgewählt ist,
- n gleich 0, 1 oder 2 ist,
- x für eine ganze Zahl steht, die aus 0, 1, 2, 3 oder 4 ausgewählt ist,
- R' aus einem linearen oder verzweigten Alkylrest mit 1 bis 4 Kohlenstoffatomen, einem linearen oder verzweigten Alkenylrest mit 2 bis 4 Kohlenstoffatomen ausgewählt ist und nur im Fall von n = x = 0 einem Wasserstoffatom ausgewählt ist,

in einer in einem Reaktor durchgeführten katalytischen Wassergas-Shift-Reaktion zur Aktivierung eines schwefelbeständigen Shift-Katalysators,
wobei die Verbindung der Formel (I) dem rohen Synthesegas stromaufwärts des Reaktors zugesetzt wird und die resultierende Mischung kontinuierlich in den Reaktor eingeleitet wird.

**11.** Verwendung nach Anspruch 10, wobei die Verbindung der Formel (I) aus Dimethyldisulfid und Dimethylsulfoxid, vorzugsweise Dimethyldisulfid, ausgewählt ist.

## Claims

1. Process for producing hydrogen-enriched synthesis gas by means of a catalytic gas-to-water shift reaction carried out on a crude synthesis gas in a reactor, said reaction being carried out in the presence of at least one compound of formula (I):

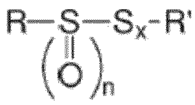

(I)

in which:

- R is chosen from a linear or branched alkyl radical containing from 1 to 4 carbon atoms, and a linear or branched alkenyl radical containing from 2 to 4 carbon atoms,
- n is equal to 0, 1 or 2,
- x is an integer chosen from 0, 1, 2, 3 or 4,
- R' is chosen from a linear or branched alkyl radical containing from 1 to 4 carbon atoms, a linear or branched alkenyl radical containing from 2 to 4 carbon atoms and, only when n=x=0, a hydrogen atom,

in which the compound of formula (I) is added to the crude synthesis gas upstream of the reactor and the resulting mixture is continuously injected into the reactor.

2. Process according to Claim 1, in which the compound of formula (I) is chosen from dimethyl disulfide and dimethyl sulfoxide, preferably dimethyl disulfide.

3. Process according to Claim 1 or 2, in which the catalytic gas-to-water shift reaction is carried out in the reactor with an entry gas temperature of at least 260°C, preferably in the range of from 280°C to 330°C.

4. Process according to any one of Claims 1 to 3, in which the compound of formula (I) is continuously injected at a flow rate of from 0.1 Nl/h to 10 $Nm^3/h$.

5. Process according to any one of Claims 1 to 4, in which the catalytic gas-to-water shift reaction is carried out in the presence of a sulfur-resistant shift catalyst, preferably a catalyst based on cobalt and on molybdenum.

6. Process according to Claim 5, in which the sulfur-resistant shift catalyst comprises an alkali metal, preferably chosen from sodium, potassium or caesium.

7. Process according to any one of Claims 1 to 6, in which the catalytic gas-to-water shift reaction is carried out at a pressure of at least 10 bar, preferably in the range of from 10 to 30 bar.

8. Process according to any one of Claims 1 to 7, in which the crude synthesis gas comprises water and carbon monoxide in a molar ratio of water to carbon dioxide of at least 1, preferably at least 1.2, more preferentially at least 1.4.

9. Process according to any one of Claims 1 to 8, in which the residence time in the reactor is in the range of from 20 to 60 seconds.

10. Use of at least one compound of formula (I):

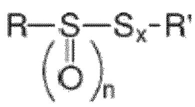

(I)

in which:

- R is chosen from a linear or branched alkyl radical containing from 1 to 4 carbon atoms, and a linear or branched alkenyl radical containing from 2 to 4 carbon atoms,

- n is equal to 0, 1 or 2,
- x is an integer chosen from 0, 1, 2, 3 or 4,
- R' is chosen from a linear or branched alkyl radical containing from 1 to 4 carbon atoms, a linear or branched alkenyl radical containing from 2 to 4 carbon atoms and, only when n=x=0, a hydrogen atom,

in a catalytic gas-to-water shift reaction carried out in a reactor for activating a sulfur-resistant shift catalyst, in which the compound of formula (I) is added to a crude synthesis gas upstream of the reactor and the resulting mixture is continuously injected into the reactor.

**11.** Use according to Claim 10, in which the compound of formula (I) is chosen from dimethyl disulfide and dimethyl sulfoxide, preferably dimethyl disulfide.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011012815 A1


### Littérature non-brevet citée dans la description


- **DAVID S. NEWSOME.** *Catal. Rev.-Sci. Eng.,* 1980, vol. 21 (2), 275-318
- **LIAN et al.** *Journal of Natural Gas Chemistry,* 2010, vol. 19 (1), 61-66
- **STENBERG et al.** *Angew. Chem. Int. Ed. Engl.,* 1982, vol. 21 (8), 619-620
- **PARK et al.** A Study on the Sulfur-Resistant Catalysts for Water Gas Shift Reaction - IV. Modification of CoMo/γ-Al2O3 Catalyst with Iron Group Metals. *Bull. Korean Chem. Soc.,* 2000, vol. 21 (12), 1239-1244